# EUROPEAN PATENT SPECIFICATION

(11) **EP 2 395 312 B1**
(45) Date of publication and mention of the grant of the patent: **22.04.2015**
(21) Application number: 11168104.5
(22) Date of filing: 30.05.2011
(51) Int. Cl.: F41A 9/26, F41A 9/73

(54) **Storage system for artillery ammunition**
Speichersystem für Artilleriemunition
Système de stockage pour munitions d'artillerie

(30) Priority: 08.06.2010 IT TO20100482
(43) Date of publication of application: 14.12.2011
(73) Proprietor: Oto Melara S.p.A., 19136 La Spezia (IT)
(72) Inventor: Bruschi, Andrea, 19136 La Spezia (IT); Chiappini, Andrea, 19136 La Spezia (IT)
(74) Representative: Di Gennaro, Sergio

(56) References cited:
- EP-A1- 0 277 478
- WO-A1-84/00416

## Description

The present invention relates to the field of devices adapted to assist in loading artillery ammunition; more in detail, it relates to a storage system for artillery ammunition and to an associated computer program.

It is known that on warships and submarines artillery ammunitions are stored in magazines which are typically located below deck or on a deck typically positioned near the ship's bottom.

The artillery ammunition must be picked from the magazine and transported to the piece of artillery, where they can then be fired.

One problem which is encountered when handling artillery ammunition is caused by the weight and dimensions thereof. In fact, such ammunition may weigh up to several hundreds of kilograms, which makes them essentially impossible to manipulate by hand, thus requiring the use of special handling devices.

Moreover, the pieces of artillery carried by ships and submarines can traditionally fire munitions of different types, characterized by different calibre, length, explosive power and warhead type. Therefore, there is a need for having available, on the ship's deck used as an ammunition magazine, devices or systems capable of handling munitions of different natures.

Although known magazines can contain ammunition of different types, they however suffer from some limitations. When a firing action is taking place, especially a fast one, as is typical, for example, in the course of a battle, the munitions are moved from the magazine to a hoist and then up to a piece of artillery in a not wholly automatic manner, and when the type of ammunition must be changed a manual action is still required.

Furthermore, if a munition is not fired, traditional storage systems will not allow it to be automatically unloaded.

The storage systems known in the art usually include structures, called drums, in which the artillery ammunition are inserted, ready for being sent to a piece of artillery. The artillery ammunition drum resembles, as far as its function is concerned, a larger-scale copy of a typical drum of a revolver pistol, and operates in a similar manner, although artillery ammunition are not fired directly from the drum, being only picked up therefrom, one piece at a time, following one rotation thereof.

Furthermore, from International patent application WO84/00416, which represents the starting point of the present invention, an automatic loading mechanism contained within a turret is known operating to move fixed ammunition rounds between a turret mounted magazine and the cannon breech.

The magazine in one embodiment includes a rotating carousel and a number of rotatable drums mounted thereon. The drums have storage cells for ammunition rounds.

The storage systems known in the art do not allow the drum to be partially loaded with ammunition during a firing action. When the drum is empty, the firing action must be interrupted and the drum must be loaded again. During both offensive and defensive firing actions, this turns out to be particularly dangerous because the warship or submarine is substantially placed in the condition of not being able to fire and of needing to replace the piece of artillery for which ammunition is about to be loaded onto the drum with other pieces of artillery which, due to their different firing power or position on the ship or submarine, might be inefficient or even incapable of hitting the target(s) (e.g. because they are being covered by the foredeck or by the tower).

It is therefore a first object of the present invention to describe a storage system for artillery ammunition which is free from the above-mentioned drawbacks.

According to a further aspect, which does however not form part of the present invention, a computer program allows for the automatic selection of one drum from among a plurality of drums in a storage system for artillery ammunition.

The present invention provides a storage system for artillery ammunition as claimed in the first claim.

The invention will now be described with reference to the annexed drawings, which illustrate one nonlimiting embodiment thereof, wherein:
- Fig. 1 is a first perspective view of a storage system for artillery ammunition according to the present invention;
- Fig. 2 is a second perspective view of a storage system for artillery ammunition according to the present invention;
- Figs. 3, 4 and 5 respectively show some parts of the storage system for artillery ammunition of Fig. 1;
- Fig. 6 is a third perspective view of a storage system for artillery ammunition according to the present invention, inclusive of an ammunition hoist.

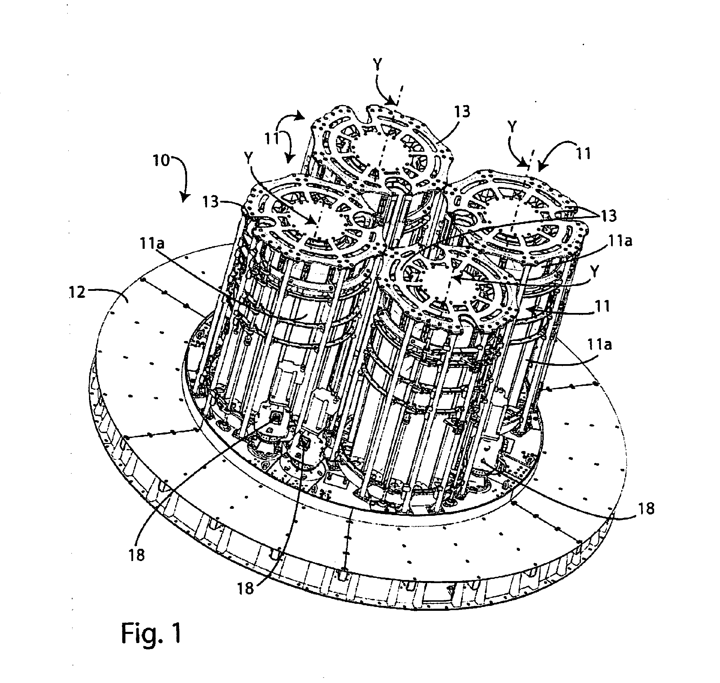

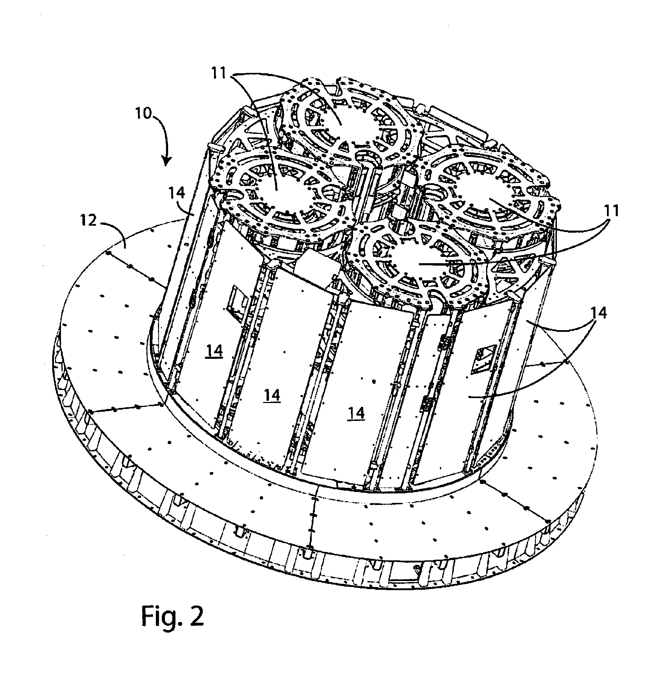

Referring now to Figs. 1 and 2, reference numeral 10 designates as a whole a storage system for artillery ammmunition.

System 10 comprises:
- a plurality of rotary drums 11, which rotate about a respective first axis Y (or central axis); and
- a rotatable support 12, which can turn about a second axis Z, parallel to the axis Y, and on which the plurality of rotary drums 10 are rotatably pivoted; and
- a data processing unit 30 for the automated selection of drum 10, which can also rotate rotatable support 12 in order to change the drum from which munition 100 is to be picked up in order to be sent to the piece of artillery on a conveying device.

More in detail, each rotary drum 11 comprises a plurality of cells 11a designed to contain a respective munition 100 arranged substantially parallel to axis Y. In particular, cells 11a can contain traditional artillery ammunition, HEFSDS (High-Explosive Fin-Stabilized Discarding Sabot) ammunition, or APFSDS (Armour-Piercing Fin-Stabilized Discarding Sabot) ammunition.

As shown in Fig. 2, all around drums 11 a plurality of panels 14 extend, which are substantially arranged parallel to axis Z, and which form as a whole a cylinder adapted to contain drums 11 and having a smaller diameter than said rotatable support 12.

Each one of drums 11, which is turned about the respective first axis Y by a respective motor 18 arranged at the base, in the lower area in contact with rotatable support 12, comprises a plurality of cells 11a, each of which contains one munition 100; all the cells of a drum 11 are designed to contain the same type of munition 100, so that on rotatable support 12 there may coexist, for example, a first drum 11 with cells 11a susceptible of containing ammunition of a first type, and a second drum 11 with cells 11a susceptible of containing ammunition of a second type, different from the first one. Thus, rotatable support 12 acts as if it were a drum itself, equipped with subelements (actual drums 11).

Cells 11a are oriented substantially parallel to axis Y, and therefore have a direction of maximum extension which is parallel to this latter axis. Once munitions 100 have been loaded into the respective cells 10a, they are also substantially oriented like axis Y.

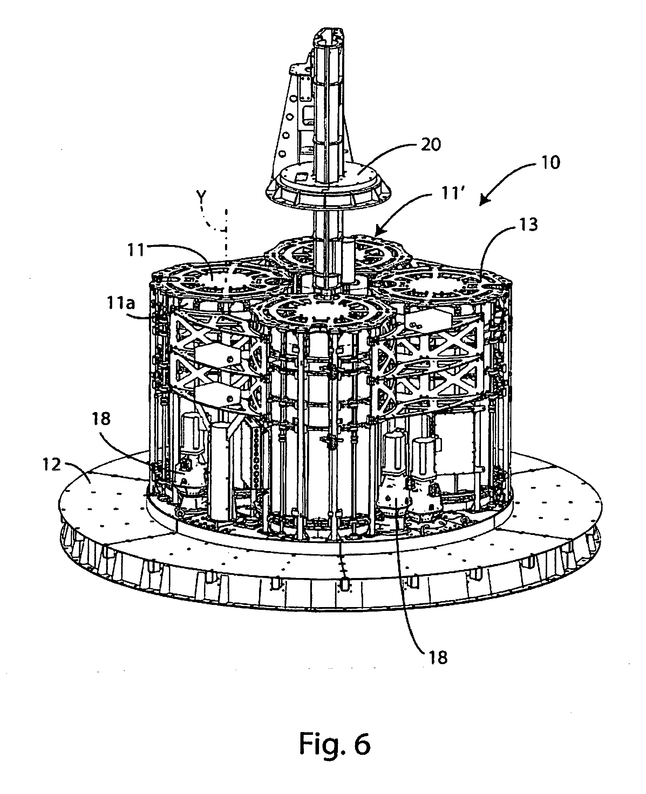

Finally, Fig. 6 shows that storage system 10 according to the present invention further comprises extraction and loading means 20, which pick up munitions 100 in a known manner from a drum 11' selected from among the plurality of drums 11 on rotatable support 12, and extract munition 100 from one of cells 11a in order to place it into an ammunition hoist that will carry it to the piece of artillery. In particular, drum 11' is selected by rotating rotatable support 12.

The ammunition extraction and loading means 20 are also configured in a manner such as to be able to unload munition 100 from the hoist and reposition it into respective cell 11a on selected drum 11' if it has not been fired.

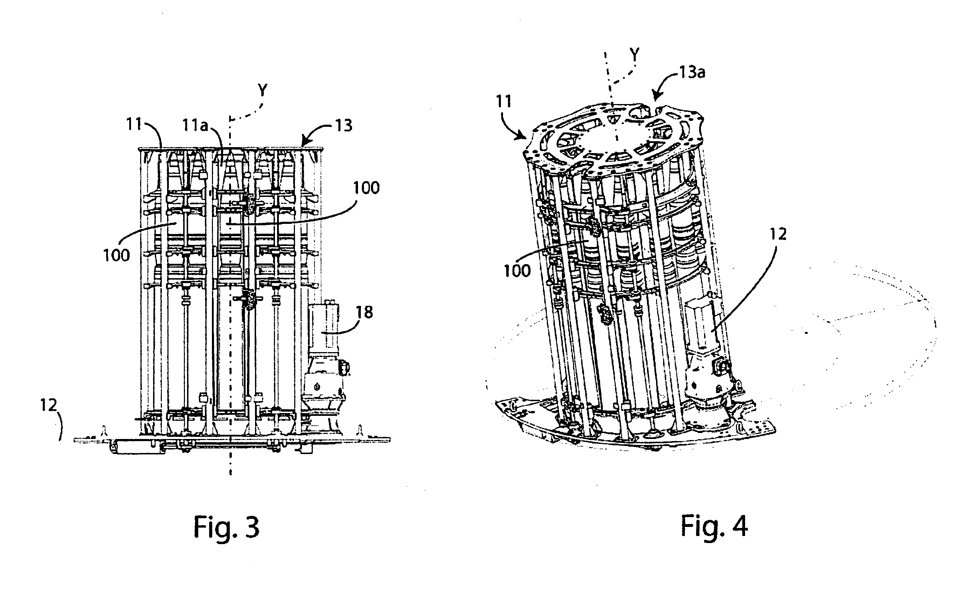

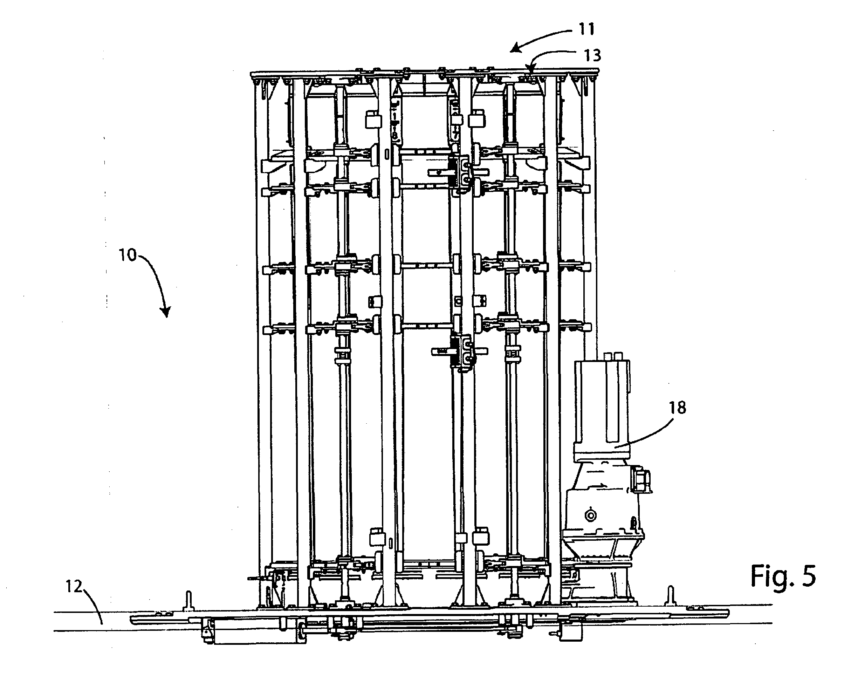

As shown more in detail in Figs. 3-5, each one of drums 11 further comprises a rack 13 having a substantially circular cross-section and being so positioned around the drum body as to inscribe it within itself.

In fact, each cell 11a is concave towards the outside of drum 11 and delimits the position of the munition towards the centre of drum 11. Therefore, each cell 11a substantially describes a first semicylinder that contains one munition 100, which is coupled to the circumference of rack 13 in a manner such that munition 100 touches rack 13 tangentially. Rack 13 delimits the position of the munition itself on the external area of the drum.

Rack 13, which has an axis coinciding with axis Y of drum 11 and is rotatable relative to the latter, is not completely closed, but has an opening 13a, the size of which allows for the insertion of one munition 100; through this opening, munitions 100 can be loaded into drum 11 one at a time.

Therefore, thanks to opening 13 it is possible to reload drums 11 other than selected drum 11' by placing thereinto one munition at a time by means of one rotation of rack 13 relative to drum 11.

In addition, the storage system for artillery munitions according to the present invention also comprises a data processing unit capable of selecting, upon a user's command, one specific type of ammunition 100 and, as a result, one specific drum 11 from among the plurality of drums 11 installed on rotatable support 12.

The data processing unit 30 reads a memory or data storage device containing ammunition-drum associations, thus substantially storing the positions of each specific type of ammunition available on rotatable support 12.

When a particular type of ammunition 11 (s-type ammunition, for simplicity) is selected, data processing unit 30 sends rotation control signals to an actuator of rotatable support 12 in order to allow drum 11 containing ammunition of the specified type (s-type ammunition) to be positioned at a point corresponding to the extraction and loading means 20; at this point, it controls respective motor 18 for rotating the drum, following the loading of a munition 100, towards the piece of artillery.

In the meantime, all the drums of a type different from those of the selected type can be reloaded by placing one munition at a time into opening 13a of rack 13.

If a different type of ammunition is to be used, the user must operate the data processing unit by selecting a second type of ammunition (t-type ammunition); once again, the data processing unit will send rotation control signals to an actuator of rotatable support 12 in order to allow drum 11 containing ammunition of the specified type (t-type ammunition) to be positioned at a point corresponding to the extraction and loading means 20; in this case, the drum containing the s-type ammunition will no longer be near the extraction and loading means and, as a result, it can be loaded again as previously described.

The advantages of the storage system for artillery ammunition according to the present invention are apparent in the light of the above description. In particular, it allows feeding different types of ammunition from the magazine to a hoist and then up to a piece of artillery in the course of a firing action, even a fast one, in a completely automated manner. In particular, through the storage system for artillery munitions according to the present invention it is possible to provide an artillery ammunition supply at a rate higher than thirty rounds per minute.

Furthermore, if a munition has not been fired, then the storage system according to the present invention allows it to be automatically unloaded again (the so-called *strike down*) towards the cell of the respective drum.

The storage system for artillery ammunition according to the present invention also allows reloading the ammunition drums in the course of a firing action. This possibility is very advantageous during both offensive and defensive firing actions, in that it avoids or anyway considerably reduces the risk that the warship or submarine might be unable to fire, thus preventing the latter from having to replace the piece of artillery whose munitions are about to be reloaded into the drum with other pieces of artillery which, due to their different firing power or position on the ship's or submarine's body, might be inefficient or even incapable of hitting the target(s) (e.g. because they are being covered by the foredeck or by the tower).

Furthermore, the system according to the present invention is modular and disassemblable, and can therefore be easily taken aboard.

Finally, the drums of the system according to the present invention can be arranged close to one another until the racks substantially touch; this ensures substantially smaller overall dimensions.

The device described so far may be subject to variations, modification or additions obvious to the man skilled in the art without departing from the protection scope thereof as set out in the appended claims.

## Claims

1. A storage system (10) for artillery ammunition, susceptible of containing artillery ammunition (100) of various types and comprising a plurality of drums (11) rotating about a central axis (Y) of their own, each having a plurality of cells (11a), each of which is adapted to contain one of said munitions (100);
said storage system (10) comprises:
- a rotatable support (12), which can turn about an axis of rotation (Z) of its own, parallel to said central axis (Y), on which said plurality of rotary drums (11) are rotatably pivoted; and
- at least one data processing unit for the automated selection of a drum (11') from among said plurality of rotary drums (11);
wherein each drum of said plurality of drums (11) comprises an external rack (13) positioned around each drum (11) of said plurality of drums, wherein each cell (11a) comprises a semicylindrical structure for containing the ammunition, which is concave and delimits a position of said munition (100) in the respective cell (11a) towards a centre of said drum (11), and wherein said external rack (13) delimits said position of said munition (100) in the cell (11a) on an external area of said drum (11).
**characterized in that** said external rack (13) is mounted in a manner such that it can rotate with respect to said drum (11) and comprises an opening (13a) for inserting ammunition into said cell (11a); said opening (13a) extending, for a maximum dimension thereof, parallel to said central axis (Y).

2. Storage system for artillery ammunition according to claim 1, wherein said plurality of drums (11) comprise at least one first drum susceptible of being turned by a respective motor (18) and including a plurality of cells (11a) designed to contain a first type of artillery ammunition, and one second drum including a plurality of cells (11a) designed to contain a second type of artillery ammunition (100).

3. Storage system for artillery ammunition according to any one of the preceding claims, wherein said cells (11a) have a direction of maximum extension substantially parallel to said central axis (Y) and are consequently susceptible of containing artillery ammunition (100) substantially oriented parallel to said central axis (Y).

4. Storage system for artillery ammunition according to claim 1, further comprising means (20) for extracting said artillery ammunition (100) from a cell (11a) of a drum (11) selected from among said plurality of drums (11) and for loading it onto an ammunition hoist.

5. Storage system for artillery munitions according to claim 4, wherein said extraction and loading means (20) are configured in a manner such as to allow a munition (100) that has not been fired to be unloaded and placed back into the respective cell (11a).

6. Storage system for artillery ammunition according to claim 1, wherein said opening (13a) enables loading of said artillery munition (100) into said cell (11a) in an operating condition in which a piece of artillery is firing artillery ammunition (100) loaded from a drum (11) selected from among said plurality of drums (11) which is different from said drum for which said artillery munition (100) is being loaded into said cell (11a).

7. Storage system for artillery ammunition according to any one of the preceding claims, wherein said drums (11) are specifically configured for housing naval artillery cannon or howitzer munitions of the HEFSDS (High-Explosive Fin-Stabilized Discarding Sabot) type or of the APFSDS (Armour-Piercing Fin-Stabilized Discarding Sabot) type.

## Patentansprüche

1. Speichersystem (10) für Artilleriemunition, das geeignet ist, Artilleriemunition (100) verschiedener Typen aufzunehmen, und das mehrere Trommeln (11), die sich um ihre eigene zentrale Achse (Y) drehen, umfasst, wobei jede Trommel mehrere Zellen (11a) aufweist, von denen jede dafür ausgelegt ist, eine der Munitionen (100) aufzunehmen;
wobei das Speichersystem (10) umfasst:
- einen drehbaren Träger (12), der sich parallel zu der zentralen Achse (Y) um seine eigene Drehachse (Z) drehen kann und auf dem mehrere drehbare Trommeln (11) drehbar gelagert sind; und
- mindestens eine Datenverarbeitungseinheit für die automatische Auswahl einer Trommel (11') aus den mehreren drehbaren Trommeln (11);
wobei jede Trommel von den mehreren Trommeln (11) einen äußeren Gestellrahmen (13), der um jede Trommel (11) der mehreren Trommeln (11) positioniert ist, umfasst, wobei jede Zelle (11a) eine halbzylindrische Struktur zur Aufnahme der Munition umfasst, die konkav ist und eine Position der Munition (100) in der jeweiligen Zelle (11a) in Richtung eines Zentrums der Trommel (11) abgrenzt, und wobei der äußere Gestellrahmen (13) die Position der Munition (100) in der Zelle (11a) auf einer äußeren Fläche der Trommel (11) abgrenzt,
**dadurch gekennzeichnet, dass** der äußere Gestellrahmen (13) in einer Weise befestigt ist, dass er sich in Bezug auf die Trommel (11) drehen kann und dass er eine Öffnung (13a) umfasst, um Munition in die Zelle (11a) einzusetzen; wobei sich die Öffnung (13a) für eine maximale Abmessung derselben parallel zu der zentralen Achse (Y) erstreckt.

2. Speichersystem für Artilleriemunition nach Anspruch 1, wobei die mehreren Trommeln (11) mindestens eine erste Trommel, die geeignet ist, von einem jeweiligen Motor (18) gedreht zu werden, und die mehrere Zellen (11a) enthält, die dafür ausgelegt sind, einen ersten Typ von Artilleriemunition aufzunehmen, und eine zweite Trommel umfassen, die mehrere Zellen (11a) enthält, die dafür ausgelegt sind, einen zweiten Typ von Artilleriemunition (100) aufzunehmen.

3. Speichersystem für Artilleriemunition nach einem der vorhergehenden Ansprüche, wobei die Zellen (11a) eine Richtung maximaler Ausdehnung, die im Wesentlichen parallel zu der zentralen Achse (Y) ist, aufweisen und die folglich geeignet sind, Artilleriemunition (100) aufzunehmen, die im Wesentlichen parallel zu der zentralen Achse (Y) orientiert ist.

4. Speichersystem für Artilleriemunition nach Anspruch 1, das ferner Mittel (20) umfasst, um die Artilleriemunition (100) aus einer Zelle (11a) einer Trommel (11), die aus mehreren Trommeln (11) ausgewählt worden ist, herauszuziehen und sie auf eine Munitionshebevorrichtung zu laden.

5. Speichersystem für Artilleriemunitionen nach Anspruch 4, wobei die Mittel (20) zum Herausziehen und zum Laden in einer Weise konfiguriert sind, die es einer Munition (100), die nicht abgefeuert worden ist, ermöglichen, entladen zu werden und zurück in der jeweiligen Zelle (11a) angeordnet zu werden.

6. Speichersystem für Artilleriemunition nach Anspruch 1, wobei die Öffnung (13a) das Laden der Artilleriemunition (100) in die Zelle (11a) in einem Betriebszustand ermöglicht, in dem ein Teil der Artillerie Artilleriemunition (100) abfeuert, die aus einer Trommel (11) geladen worden ist, die von den mehreren Trommeln (11) ausgewählt worden ist und die eine andere ist als die Trommel, für die die Artilleriemunition (100) in die Zelle (11a) geladen wird.

7. Speichersystem für Artilleriemunition nach einem der vorhergehenden Ansprüche, wobei die Trommeln (11) spezifisch konfiguriert sind, um Munitionen von Schiffsartilleriekanonen oder von Haubitzen des HEFSDS-Typs (High Explosives Fin-Stabilized Discarding Sabot = Hochexplosive flügelstabilisierte, abwerfbare Treibkäfiggeschosse) oder des APFSDS-Typs (Armour-Piercing Fin-Stabilized Discarding Sabot = Panzerbrechende flügelstabilisierte, abwerfbare Treibkäfiggeschosse) aufzunehmen.

## Revendications

1. Système de stockage (10) pour munition d'artillerie, susceptible de contenir une munition d'artillerie (100) de divers types et comprenant une pluralité de tambours (11),tournant autour d'un axe central (Y),d'eux-mêmes, chacun comportant une pluralité de cellules (11a), dont chacune est adaptée pour contenir une desdites munitions (100) ;
ledit système de stockage (10) comprend :
- un support rotatif (12), qui peut tourner autour d'un axe de rotation (Z),de lui-même, parallèle audit axe central (Y), sur lequel ladite pluralité de tambours rotatifs (11) pivotent de façon rotative ; et
- au moins une unité de traitement de données pour la sélection automatisée d'un tambour (11') parmi ladite pluralité de tambours rotatifs (11) ;
dans lequel chaque tambour parmi ladite pluralité de tambours (11) comprend un râtelier externe (13) positionné autour de chaque tambour (11) de ladite pluralité de tambours, dans lequel chaque cellule (11a) comprend une structure semi-cylindrique pour contenir la munition, qui est concave et délimite une position de ladite munition (100) dans la cellule respective (11a) vers un centre dudit tambour (11), et dans lequel ledit râtelier externe (13) délimite ladite position de ladite munition (100) dans la cellule (11a) sur une zone externe dudit tambour (11),
**caractérisé en ce que** ledit râtelier externe (13) est monté d'une manière telle qu'il puisse tourner par rapport audit tambour (11) et comprend une ouverture (13a) pour insérer une munition dans ladite cellule (11a) ;ladite ouverture (13a) s'étendant, pour une dimension maximum de celle-ci, parallèlement audit axe central (Y).

2. Système de stockage pour munition d'artillerie selon la revendication 1, dans lequel ladite pluralité de tambours (11) comprennent au moins un premier tambour susceptible d'être tourné par un moteur respectif (18) et comprenant une pluralité de cellules (11a) conçues pour contenir un premier type de munition d'artillerie, et un second tambour comprenant une pluralité de cellules (11a) conçues pour contenir un second type de munition d'artillerie (100).

3. Système de stockage pour munition d'artillerie selon une quelconque des revendications précédentes, dans lequel les dites cellules (11a) possèdent une direction d'étendue maximum sensiblement parallèle audit axe central (Y) et sont par conséquent susceptibles de contenir une munition d'artillerie (100) orientée de façon sensiblement parallèle audit axe central (Y).

4. Système de stockage pour munition d'artillerie selon la revendication 1, comprenant en outre des moyens (20) pour extraire ladite munition d'artillerie (100) d'une cellule (11a) d'un tambour (11) sélectionné parmi ladite pluralité de tambours (11) et pour la charger sur un appareil de levage de munition.

5. Système de stockage pour munition d'artillerie selon la revendication 4, dans lequel les dits moyens d'extraction et de chargement (20) sont conçus de manière telle à permettre à une munition (100), qui n'a pas été tirée, d'être déchargée et remise dans la cellule respective (11a).

6. Système de stockage pour munition d'artillerie selon la revendication 1, dans lequel ladite ouverture (13a) permet le chargement de la dite munition d'artillerie (100) dans ladite cellule (11a) dans une condition de fonctionnement dans laquelle une pièce d'artillerie tire une munition d'artillerie (100) chargée à partir d'un tambour (11) sélectionné parmi ladite pluralité de tambours (11) qui est différent dudit tambour pour lequel ladite munition d'artillerie (100) est chargée dans ladite cellule (11a).

7. Système de stockage pour munition d'artillerie selon une quelconque des revendications précédentes, dans lequel lesdits tambours (11) sont spécifiquement configurés pour loger des munitions de canon d'artillerie ou d'obusier naval du type HEFSDS (explosif brisant empenné à sabot éjectable) ou du type APFSDS (projectile perforant empenné à sabot éjectable).
